# EUROPÄISCHE PATENTSCHRIFT

(11) **EP 0 533 040 B1**
(45) Veröffentlichungstag und Bekanntmachung des Hinweises auf die Patenterteilung: **21.12.1994**
(21) Anmeldenummer: 92115392.0
(22) Anmeldetag: 09.09.1992
(51) Int. Cl.: B60T 11/224

(54) **Zweistufiges Ventil**
Two-step valve
Soupape à deux étages

(30) Priorität: 17.09.1991 DE 4130832
(43) Veröffentlichungstag der Anmeldung: 24.03.1993
(73) Patentinhaber: DEERE & COMPANY, Moline, Illinois 61265 (US)
(72) Erfinder: Gawlick, Dieter, W-6700 Ludwigshafen (DE)
(74) Vertreter: Feldmann, Bernhard

(56) Entgegenhaltungen:
- EP-A- 0 130 297
- DE-A- 1 680 211
- DE-A- 3 837 650

## Beschreibung

Die Erfindung betrifft ein zweistufiges Ventil, insbesondere Bremsventil, mit zwei Querschnittsstufen, deren Wirkquerschnitte nacheinander wirksam werden, indem zunächst der größere Wirkquerschnitt zum Befüllen einer Anlage verwendet wird und dann nach einer Übergangsphase ausschließlich der kleinere Wirkquerschnitt zum Aufbringen des Arbeitsdruckes eingesetzt wird. Das Ventil enthält einen zwischen dem Druckraum des größeren Wirkquerschnitts und einem Vorratsbehälter liegenden Entlastungskanal, der während der Druckstufe des Ventils, bei der lediglich der kleinere Wirkquerschnitt wirksam ist, geöffnet ist bzw. sich (beispielsweise aufgrund eines Überdruckes) öffnen läßt.

Aus der DE-A-1 680 211 ist ein zweistufiges Bremsventil der eingangs genannten Art bekannt geworden, bei dem der große Wirkquerschnitt durch einen Druckkolben gebildet wird, der dichtend in einer Sackbohrung im Ventilgehäuse angeordnet ist und sich in der Sackbohrung durch eine Kolbenstange verschieben läßt. Der dem größeren Wirkquerschnitt entsprechende erste Druckraum befindet sich vor der Stirnseite des Druckkolbens. Der Druckkolben enthält eine zu seiner Stirnseite hin offene axiale Bohrung, die einen am Ventilgehäuse festgelegten, jedoch innerhalb der Bohrung verschiebbaren Schaft aufnimmt, wodurch sich im Druckkolben ein zweiter Druckraum mit einem kleineren Wirkquerschnitt ausbildet. Der Schaft weist eine mittige Bohrung auf, über die der zweite Druckraum mit der Bremsleitung in Verbindung steht. Der erste Druckraum ist über ein in einer Rücklaufleitung (Entlastungskanal) angeordnetes Einwegventil mit einem Vorratsbehälter verbunden.

Beim Überschreiten eines vorgebbaren Druckes in dem ersten Druckraum öffnet das Einwegventil. Zwischen dem zweiten Druckraum und dem ersten Druckraum befindet sich eine Ventilanordnung, die einen Flüssigkeitsaustausch zwischen den Druckräumen zuläßt und beim Überschreiten eines vorgebbaren Differenzdruckes zwischen den Druckräumen diese gegeneinander abdichtet. Während einer ersten Bewegungsphase des Druckkolbens wird die Bremskammer der Bremse gefüllt, bis der Druck in der ersten Druckkammer so weit ansteigt, daß das Einwegventil öffnet. Bei weiterer Betätigung des Druckkolbens steigt der Druck in dem zweiten Druckraum weiter an und führt zum Schließen der Ventilanordnung zwischen den Druckräumen, so daß nun nur noch der kleinere Wirkquerschnitt des Schaftes wirksam ist und mit vergleichsweise geringer Betätigungskraft ein hoher Bremsdruck aufgebracht werden kann.

Die DE-A-3 837 650 beschreibt ein Bremsventil, das ähnlich zu dem soeben beschriebenen Ventil aufgebaut ist, bei dem jedoch in Ruhestellung des Druckkolbens der Schaft noch nicht in die Bohrung des Druckkolbens eingreift. Ein dichtender Eingriff erfolgt erst nach Überwindung einer vorgebbaren Wegstrecke des Druckkolbens währenddessen die Bremskammer bis zum Anlegen der Bremsbeläge gefüllt wird. Mit dem Eingreifen des Schaftes in die Bohrung des Druckkolbens wird der erste Druckraum von dem zweiten Druckraum getrennt und der kleinere Wirkquerschnitt wirksam, der den eigentlichen Bremsdruck aufbaut. Eine Ventilanordnung zwischen den beiden Druckräumen ist hier nicht erforderlich. Der erste Druckraum steht während der Füllphase mit einem Vorratsbehälter über ein in einem Entlastungskanal angeordnetes Überdruckventil und während der Druckphase über einen unmittelbaren Entlastungskanal in Verbindung.

Bei diesen und ähnlichen zweistufigen Ventilen besteht das Problem, daß bei hohen auf den Druckkolben wirkenden Kräften unzulässig hohe Arbeitsdrücke im Bremssystem oder einem anderen Verbraucher aufgebaut werden können. Diese Drücke können zu einer Beschädigung der Bremse oder eines anderen Verbrauchers führen.

Üblicherweise kann ein Schutz vor zu hohem Druck durch ein Absperrventil oder ein Ablaßventil erreicht werden. Das Absperrventil blockiert dabei nach Erreichen eines eingestellten Druckes den Hydraulikflüssigkeitsstrom zu dem Verbraucher. Dies ist jedoch bei einigen Anwendungen, beispielsweise bei Bremsen nicht zulässig, da beispielsweise bei hohen Drücken plötzlich auftretende Leckagen und sonstige Störungen nicht sofort bemerkt werden könnten. Wird ein Ablaßventil verwendet, so leitet dieses nach Überschreiten des Schaltdruckes die Hydraulikflüssigkeit aus dem System heraus, bis der Arbeitsdruck unter den Schaltdruck sinkt. Dies ist ebenfalls bei Bremsen unzulässig, da das Bremspedal in diesem Fall durchfallen würde.

Die der Erfindung zugrunde liegende Aufgabe wird darin gesehen, ein zweistufiges Ventil der eingangs genannten Art anzugeben, bei dem die genannten Probleme vermieden werden. Insbesondere soll ein Schutz der unter Druck gesetzten Arbeitsorgane (Bremszylinder) vor unzulässig hohen Drücken und eine Begrenzung des Verstellhubes des Druckkolbens (Pedalweg der Bremse) erreicht werden.

Die Aufgabe wird erfindungsgemäß durch die Lehre des Patentanspruchs 1 gelöst und gemäß der Merkmale in den abhängigen Patentansprüchen in vorteilhafter Weise weiterentwickelt.

Beim Überschreiten eines vorgebbaren Arbeitsdruckes wird der Entlastungskanal, in dem auch, wie anhand des Standes der Technik beschrieben wurde, ein Einwegventil oder ein Überdruckventil liegen kann, geschlossen. Hierdurch kann die Hydraulikflüssigkeit des dem größeren Wirkquerschnitt zugeordneten ersten Druckraumes nicht mehr in den Vorratsbehälter entweichen, so daß der Druck in dem ersten Druckraum ansteigt und die auf den Druckkolben wirkende Kraft abfängt. Der Druckkolben läßt sich nun nur im Rahmen der Kompressibilität der Hydraulikflüssigkeit weiter verschieben.

Bei Verwendung eines Überlastschutzventils im Entlastungskanal wird dieses erst dann aktiviert, wenn ein vorgebbarer Arbeitsdruck überschritten wird. Solch ein Druck kann beispielsweise der zur Notbremsung benötigte Bremsdruck sein. In diesem Druckbereich arbeitet ausschließlich der kleinere Kolbenwirkquerschnitt.

Die im ersten Druckraum des größeren Kolbenwirkquerschnittes befindliche Hydraulikflüssigkeit wird zunächst durch einen Entlastungskanal, gegebenenfalls unter Überwindung eines Überdruckventils in den Vorratsbehälter abgeleitet. Sie leistet entweder keinen Beitrag oder lediglich einen dem Überdruckventil entsprechenden Beitrag zur erforderlichen Kolbenverstellkraft. Ist der eingestellte Schaltdruck des Überlastschutzventiles erreicht, so versperrt ein vom Arbeitsdruck gesteuerter Schieber den Entlastungskanal. Dies hat zur Folge, daß die nun in dem ersten Druckraum eingeschlossene Hydraulikflüssigkeit nicht mehr entweichen kann, sondern mit zunehmendem Kolbenweg komprimiert wird. Dieser sich aufbauende Hydraulikdruck setzt einer weiteren Kolbenbewegung eine zusätzliche Widerstandskraft entgegen, welche beispielsweise bei einem Bremssystem von der Bedienungsperson durch Drücken auf das Bremspedal und damit auf den Bremskolben aufgebracht werden muß. Die mechanischen und hydraulischen Übersetzungsverhältnisse eines Bremssystems müssen so ausgelegt werden, daß nach einem vorgebbaren Kolbenweg im Anschluß an das Schließen des Überlastschutzventils die erforderliche Fußkraft größer wird, als sie die Bedienungsperson aufzubringen vermag. Somit kommt der Kolben zum Stillstand. Der an diesem Punkt erreichte Arbeitsdruck muß in einem für das System unkritischen Bereich liegen.

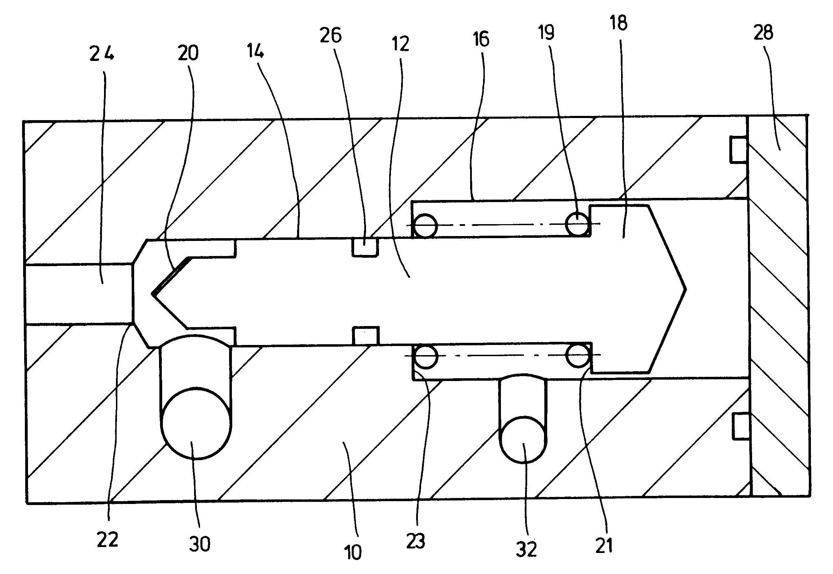

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Die einzige Figur zeigt lediglich einen Bereich eines erfindungsgemäßen zweistufigen Bremsventils, das zu einer Bremsventilanordnung gehört. Es handelt sich hierbei um den Bereich des Entlastungskanals, der zwischen dem nicht dargestellten Druckraum des größeren Wirkquerschnittes und einem nicht dargestellten Vorratsbehälter liegt. In diesem Entlastungskanal befindet sich das dargestellte Überlastschutzventil. Ein zugehöriges Bremsventil ist beispielsweise durch die DE-A-1 680 211 oder die DE-A-3 837 650 hinlänglich bekannt, so daß es hier nicht näher beschrieben wird. Vielmehr wird zum Zwecke der Offenbarung auf die genannten Druckschriften Bezug genommen.

In einer stufenförmig ausgebildeten Ventilbohrung des Ventilgehäuses 10 ist ein Schieber 12 angeordnet, der in einem engeren Abschnitt 14 der Ventilbohrung gleitbar geführt ist. An seinem in einem weiteren Abschnitt 16 der Ventilbohrung hineinragenden Ende trägt der Schieber 12 ein Kopfteil 18. Zwischen einer Stirnfläche 21 des Kopfteiles 18 und der dieser gegenüberliegenden ringförmigen Übergangsfläche 23, die sich zwischen dem engeren und dem weiteren Abschnitt 14, 16 der Ventilbohrung befindet, ist eine Druckfeder 19 angeordnet, die bestrebt ist, den Schieber 12 in Richtung des weiteren Abschnittes 16 der Ventilbohrung zu verschieben.

Das dem Kopfteil 18 gegenüberliegende Ende des Schiebers 12 trägt eine Rückschlagventilform 20, die kegelförmig ausgebildet ist und einem Sitz 22 gegenübersteht, der an der Übergangsstelle zwischen dem engeren Abschnitt 14 der Ventilbohrung und dem ersten Abschnitt 24 eines Entlastungskanals ausgebildet ist. Durch Verschieben des Schiebers 12 gegen die Kraft der Druckfeder 19 läßt sich die Rückschlagventilform 20 in Anlage mit dem Sitz 22 bringen, so daß die Verbindung zwischen der Ventilbohrung und dem ersten Abschnitt 24 des Entlastungskanals verschlossen wird.

Im mittleren Bereich des Schiebers 12 befindet sich eine ringförmige Nut 26, die einen Dichtring aufnimmt, der die beiden Teilabschnitte 14, 16 der Ventilbohrung gegeneinander abdichtet. Der weitere Abschnitt 16 der Ventilbohrung ist zur Ventilgehäuseoberfläche hin offen und durch eine Abdeckplatte 28 verschlossen. Diese Ausbildung erleichtert die Montage des Überlastschutzventils.

Der engere Abschnitt 14 der Ventilbohrung steht über einen nur bereichsweise dargestellten zweiten Abschnitt 30 des Entlastungskanals mit dem Druckraum des großen Wirkquerschnitts des Bremsventils in Verbindung. Der zweite und der erste Abschnitt 30, 24 des Entlastungskanals sind Bereiche einer Rücklaufbohrung, wie sie beispielsweise in der DE-A-1 680 211 beschrieben wurde, so daß das Überlastschutzventil in diese Rücklaufbohrung integriert ist. In Reihe zum hier beschriebenen Überlastschutzventil kann auch ein Einwegventil oder ein Überdruckventil in der Rücklaufleitung liegen.

In den weiteren Abschnitt 16 der Ventilbohrung mündet ein Kanal 32, der den Arbeitsdruck des Bremsventils führt. Der Kanal 32 ist beispielsweise an die Bremsleitung, die von dem Bremsventil zu den Bremsen führt, angeschlossen.

Die Federkraft der Druckfeder 19 wird so gewählt, daß die Rückschlagventilform 20 von dem Sitz 22 abgehoben ist und ein freier Durchstrom von dem zweiten Abschnitt 30 in den ersten Abschnitt 24 des Entlastungskanals möglich ist. Erst wenn der Arbeitsdruck in dem Kanal 32 und damit auch in dem weiteren Bereich 16 der Ventilbohrung über einen vorgebbaren Wert ansteigt, wird der Schieber gegen die Federkraft verschoben, und die Rückschlagventilform 20 legt sich an den Sitz 22 an. Der Entlastungskanal ist nun geschlossen, so daß keine Hydraulikflüssigkeit aus dem dem größeren Wirkquerschnitt zugeordneten Druckraum des Bremsventils abfließen kann.

Auch wenn die Erfindung lediglich anhand eines Ausführungsbeispiels beschrieben wurde, erschließen sich für den Fachmann im Lichte der vorstehenden Beschreibung viele verschiedenartige Alternativen, Modifikationen und Varianten, die unter die vorliegende Erfindung fallen.

## Patentansprüche

1. Zweistufiges Ventil, insbesondere Bremsventil, mit zwei Querschnittsstufen, deren Wirkquerschnitte nacheinander wirksam werden, indem zunächst der größere Wirkquerschnitt zum Befüllen einer Anlage verwendet wird und dann nach einer Übergangsphase ausschließlich der kleinere Wirkquerschnitt zum Aufbringen des Arbeitsdruckes eingesetzt wird, mit einem zwischen dem Druckraum des größeren Wirkquerschnitts und einem Vorratsbehälter liegenden Entlastungskanal (24, 30), der während der Druckstufe des Ventils, bei der lediglich der kleinere Wirkquerschnitt wirksam ist, geöffnet oder öffenbar ist, dadurch gekennzeichnet, daß der Entlastungskanal (24, 30) bei Überschreiten eines vorgebbaren Arbeitsdruckes geschlossen wird.

2. Ventil nach Anspruch 1, dadurch gekennzeichnet, daß in dem Entlastungskanal (24, 30) ein dem Arbeitsdruck ausgesetztes Überlastschutzventil angeordnet ist.

3. Ventil nach Anspruch 2, dadurch gekennzeichnet, daß das Überlastschutzventil einen Schieber (12) enthält mit einer dem Arbeitsdruck ausgesetzten Wirkfläche, der sich bei Überschreiten eines vorgebbaren Arbeitsdruckes gegen die Kraft einer Feder (19) vorschiebt und eine in dem Entlastungskanal (24, 30) angeordnete Schließeinrichtung (20, 22) betätigt.

4. Ventil nach Anspruch 3, dadurch gekennzeichnet, daß der Schieber (12) eine Rückschlagventilform (20) aufweist, die mit einem Sitz (22) in dem Entlastungskanal (24) zusammenwirkt.

5. Ventil nach einem der Ansprüche 1 bis 4, dadurch gekennzeichnet, daß in dem Entlastungskanal (24, 30) ein Sitz (22) ausgebildet ist, dem eine Rückschlagventilform (20) eines Schiebers (12) gegenübersteht, daß der Schieber (12) auf seiner der Rückschlagventilform (20) abgewandten Seite dem Arbeitsdruck ausgesetzt ist und daß eine Feder (19) an dem Schieber (12) angreift, die gegen den Arbeitsdruck wirkt, um den Entlastungskanal (24, 30) offen zu halten.

## Claims

1. A two-stage valve, especially a brake valve, with steps in cross-section whose effective cross-sections cooperate with each other in that the larger effective cross-section is initially used for filling a piece of apparatus and then solely the smaller effective cross-section is used after a transition phase for applying the working pressure, with a relief channel (24, 30) lying between the pressure space of the greater effective cross-section and a reservoir, the relief channel being open or capable of opening during the pressure stage of the valve when only the small effective cross-section is effective, characterized in that the relief channel (24, 30) is closed on overstepping a predetermined working pressure.

2. A valve according to claim 1, characterized in that a overload protection valve subjected to the working pressure is arranged in the relief channel (24, 30).

3. A valve according to claim 2, characterized in that the overload protection valve comprises a slider (12) with an active surface subject to the working pressure, wherein the slider slides against the force of a spring (19) on overstepping a predetermined working pressure and actuates a closing means (20, 22) arranged in the relief channel (24, 30).

4. A valve according to claim 3, characterized in that the slider (12) has the form of a non-return valve (20) which cooperates with a seat (22) in the relief channel (24).

5. A valve according to any of claims 1 to 4, characterized in that a seat (22) is formed in the relief channel (24, 30) and is opposite a non-return valve formation (20) on a slider (12), in that the slider is subject to the working pressure at its end opposite the non-return valve formation (20), and in that a spring (19) engages the slider (12) and acts against the working pressure, in order to keep the relief channel (24, 30) open.

## Revendications

1. Soupape à deux étages, notamment soupape de frein, comportant deux étages de sections transversales, dont les sections transversales actives deviennent actives successivement, par le fait que tout d'abord la section transversale active la plus grande est utilisée pour aérer une installation, puis, après une phase de transition, exclusivement la section transversale la plus petite est utilisée pour appliquer la pression de travail, et comportant un canal de décharge (24,30) situé entre la chambre de pression de la section transversale active la plus grande et un réservoir et qui est ouvert ou peut être ouvert pendant l'étape de mise en pression de la soupape, lors de laquelle seule la section transversale active la plus petite est active, caractérisée en ce que le canal de décharge (24,30) est fermé lors du dépassement d'une pression de travail pouvant être prédéterminée.

2. Soupape selon la revendication 1, caractérisée en ce qu'une soupape de protection contre les surcharges, qui est soumise à la pression de travail, est disposée dans le canal de décharge (24,30).

3. Soupape selon la revendication 2, caractérisée en ce que la soupape de protection contre les surcharges contient un tiroir (12) comportant une surface active soumise à la pression de travail et qui, lors du dépassement d'une pression de travail pouvant être prédéterminée, avance à l'encontre de la force d'un ressort (19) et actionne un dispositif de fermeture (20,22) disposé dans le canal de décharge (24,30).

4. Soupape selon la revendication 3, caractérisée en ce que le tiroir (12) possède la forme d'un clapet antiretour (20), qui coopère avec un siège (22) situé dans le canal de décharge (24).

5. Soupape selon l'une des revendications 1 à 4, caractérisée en ce que dans le canal de décharge (24,30) est disposé un siège (22) en vis-à-vis duquel est situé un clapet antiretour (20) d'un tiroir (12), que le tiroir (12) est soumis à la pression de travail au niveau de sa face tournée à l'opposé du clapet antiretour (20) et que le tiroir (20) est attaqué par un ressort (19) qui agit à l'encontre de la pression de travail pour maintenir ouvert le canal de décharge (24,30).
